# FASCICULE DE BREVET EUROPEEN

(11) **EP 0 635 526 B1**
(45) Date de publication et mention de la délivrance du brevet: **29.09.2004**
(21) Numéro de dépôt: 94420195.3
(22) Date de dépôt: 08.07.1994
(51) Int. Cl.: C08F 283/12

(54) **Dispersions aqueuses de polyorganosiloxanes fonctionnalisés greffés, leur procédé de préparation et leur utilisation pour la réalisation de compositions silicones durcissables**
Wässrige Dispersionen von gepfropften funktionalisierten Polyorganosiloxanen, Verfahren zur deren Herstellung und ihre Verwendung in härtbaren Siliconzusammensetzungen
Aqueous dispersions of grafted functionalized polysiloxanes, their method of preparation and their use in curable silicone compositions

(30) Priorité: 23.07.1993 FR 9309095
(43) Date de publication de la demande: 25.01.1995
(60) Demande divisionnaire: 02014319.4
(73) Titulaire: RHODIA CHIMIE, 92408 Courbevoie Cédex (FR)
(72) Inventeur: Canivenc, Edith, F-69008 Lyon (FR); Richard, Joel, Rés. Mermoz, F-60500 Chantilly (FR)
(74) Mandataire: Trolliet, Maurice

(56) Documents cités:
- EP-A- 0 541 395
- WO-A-90/10665
- GB-A- 1 149 935
- US-A- 3 575 910

## Description

La presente invention a pour objet des dispersions aqueuses réactives stables de polyorganosiloxanes fonctionnalisés greffés par des motifs polymères dérivés de monomères éthyléniquement insaturés susceptibles de polymériser par voie radicalaire, leur procédé de préparation, ainsi que leur utilisation pour la réalisation de compositions silicones durcissables.

L'art antérieur est constitué par les documents suivants :
- Le document WO-A-90 10665 décrit des dispersions aqueuse de polymère modifiés à partie d'un polyester greffé avec des greffons constitués de motifs copolymères dérivés d'au moins un monomère vinylique et d'au moins un organopolysiloxane éthyléniquement insaturé soluble dans ledit ou lesdits monomère(s) vinylique(s).
- Le document EP-A-0 541 395 décrit des agents de revêtement comprenant des dispersions aqueuses de polyorganosiloxanes fonctionnalisés greffés.
- Les documents US-3 575 910 et GB 1 149 935 décrivent des dispersions aqueuses à base de copolymères siloxane-acrylate.

Les dispersions aqueuses réactives stables de polyorganosiloxanes fonctionnalisés greffés faisant l'objet de l'invention, sont
caractérisées en ce qu'elles sont obtenues par polymérisation radicalaire en émulsion aqueuse ou en microsuspension:
- d'au moins un monomère éthyléniquement insaturé susceptible de polymériser par voie radicalaire choisi dans le groupe constitué par un ester monoéthyléniquement insaturé d'acide carboxylique saturé, un ester saturé ou amide d'acide carboxylique monoéthyléniquement insaturé, un nitrile monoéthyléniquement insaturé, un acide carboxylique monoéthyléniquement insaturé, un hydroxyalkyl- ou aminoalkyl- ester d'acide carboxylique monoéthyléniquement insaturé, un monomère vinylaromatique, et l'acrylate ou le méthacrylate de dicyclopentadiényle,
- en présence uniquement d'un polyorganosiloxane fonctionnalisé contenant des motifs semblables ou différents de formule (I):

   Rₐ Y_{b} X_{c} Si O_{(4-a-b-c)/2} (I)

   formule dans laquelle :
   - les symboles R sont semblables ou différents et représentent un groupe alkyle en C₁-C₁₈, un groupe aryle ou aralkyle en C₆-C₁₂, éventuellement substitué par des atomes d'halogène ;
   - les symboles X sont semblables ou différents et représentent une fonction réactive susceptible de réagir chimiquement par addition, polyaddition, condensation, polycondensation, déshydrogénopolycondensation, sous l'action de la chaleur, de radiations, de faisceaux d'électrons et/ou à l'aide d'un catalyseur, consistant dans la fonction hydrogéno ou dans une fonction réactive liée à un atome de silicium par une liaison Si-C ou Si-O-C, ladite fonction réactive autre que la fonction hydrogéno étant un groupe hydrocarboné hydroxyfonctionnel, époxyfonctionnel, alkoxyfonctionnel, aryloxyfonctionnel ou acyloxyfonctionnel contenant de 1 à 20 atomes de carbone ;
   - les symboles Y sont semblables ou différents et représentent un reste hydrocarboné éthyléniquement insaturé pouvant contenir un ou plusieurs hétéroélément(s) O ou N, reste lié à un atome de silicium du motif de formule (I) par une liaison Si-C et susceptible de réagir par voie radicalaire avec ledit ou les dits monomère(s) éthyléniquement insaturé(s), ledit reste Y étant un groupe -y-Y', où
      . y représente un radical polyvalent alkylène linéaire ou ramifié en C₁-C₁₈, éventuellement prolongé par des restes bivalents éthylène amine ou polyéthylèneamine, oxyalkylène ou polyoxyalkylène en C₁-C₃ éventuellement substitué par un radical hydroxy, hydroxycyclohexylène
      . Y' représente un radical alcénylcarbonyloxy ;
   - a, b et c sont égaux à 0, 1, 2, ou 3;
   - a+b+c = 0, 1, 2 ou 3 ;
      le taux de motifs SiO_{4/2} étant inférieur à 30% en mole ;
      le nombre de motifs de formule (I) dans lesquels l'atome de silicium porte une fonction X et/ou un reste Y est tel que lesdits polyorganosiloxanes contiennent
   - au moins 5 milliéquivalents, de préférence de 10 à 500 milliéquivalents, de fonctions X pour 100 grammes de polyorganosiloxane de formule (I),
   - au moins 5 milliéquivalents, de préférence de 10 à 500 milliéquivalents, de restes Y pour 100 grammes de polyorganosiloxane de formule (I).
   - étant exclu la possibilité selon laquelle les polyorganosiloxanes de formule (I) sont obtenus par polymérisation en émulsion préalablement à la préparation des dispersions aqueuses.

Parmi les monomères éthyléniquement insaturés dont dérivent lesdits polyorganosiloxanes fonctionnalisés greffés on peut citer ceux du type :
· esters monoéthyléniquement insaturés d'acides carboxyliques saturés (acétate, propionate, butyrate, stéarate, benzoate de vinyle)
. les esters saturés et amides d'acide carboxyliques monoéthyléniquement insaturés (acrylates et méthacrylates d'alkyle en C₁-C₂₀ tels que méthyle, butyle, heptyle, propyle, heptadécanyle, acrylamide, méthacrylamide)
. les nitriles monoéthyléniquement insaturés (acrylonitrile, méthacrylonitrile)
. les acides carboxyliques monoéthyléniquement insaturés (acide acrylique, méthacrylique, itaconique, maleique)
. les hydroxyalkyl- ou aminoalkyl- esters d'acides carboxyliques monoéthyléniquement insaturés (acrylate d'hydroxyéthyle, hydroxypropyle méthacrylate de 2-aminoéthyle)
· les monomères vinylaromatiques (styrène, vinyltoluène)
. l'acrylate ou méthacrylate de dicyclopentadiényle

Parmi les radicaux R figurant dans la formule (I), on peut citer les groupes méthyle, éthyle, octyle, trifluoropropyle, phényle ; de préférence au moins 80% molaire desdits radicaux R représentent un groupe méthyle.

On entend par "fonction réactive" toute fonction susceptible de réagir chimiquement par addition, polyaddition, condensation, polycondensation, déshydrogénopolycondensation, ce éventuellement sous l'action de la chaleur, de radiations, de faisceaux d'électrons et/ou à l'aide d'un catalyseur.

Comme exemple de fonction réactive X, on peut citer :
- la fonction hydrogéno ;
- ainsi que des groupes hydrocarbonés pouvant contenir de 1 à 20 atomes de carbone du type
   . hydroxyfonctionnels tels que 3-hydroxypropyl, 3-(2hydroxyéthoxy)propyl ;
   . époxyfonctionnels tels que 3-glycidoxypropyl, 4-éthanediyle(1,2-époxycyclohexyl) ;
   . alkoxyfonctionnels tels que méthoxy, éthoxy, butoxy, octyloxy ;
   . aryloxyfonctionnels tels que phényloxy ;
   . acyloxyfonctionnels tels que acétoxy ;

Comme exemple de restes Y, on peut citer les groupes -y-Y', où
. y représente un radical polyvalent alkylène linéaire ou ramifié en C₁-C₁₈, éventuellement prolongé par des restes bivalents du type
   . éthylène amine ou polyéthylèneamine
   . oxyalkylène ou polyoxyalkylène en C₁-C₃, éventuellement substitué par un radical hydroxy
   . hydroxycyclohexylène
. Y' représente un radical éthyléniquement insaturé du type
   . alcénylcarbonyloxy tel que acrylyloxy, méthacrylyloxy.
A titre d'exemple de radicaux y on peut citer :
-CH₂- -(CH₂)₂- -(CH₂)₃- -CH₂-CH(CH₃)-CH₂-- (CH₂)₃-NH-CH₂-CH₂- -(CH₂)₃-OCH₂- -(CH₂)₃-(OCH₂-CH₂)₂₉--(CH₂)₃-[O-CH₂-CH(CH₃))-]- -(CH₂)₃-OCH₂CH(OH)CH₂--(CH₂)₂-C₆H₉(OH)-

Lesdits polyorganosiloxanes contenant les motifs de formule (I) peuvent être des polymères linéaires pouvant éventuellement présenter jusqu'à 50% en poids de ramifications (motifs autres que des motifs "D"), des polymères cycliques ou des polymères tridimensionnels (résines).

Les dispersions réactives stables faisant l'objet de l'invention, présentent généralement un extrait sec de l'ordre de 5 % à 60 %, de préférence de l'ordre de 25 % à 50 % en poids.

Les dispersions aqueuses faisant l'objet de l'invention sont obtenues par polymérisation radicalaire en émulsion aqueuse ou en microsuspension d'au moins un monomère éthyléniquement insaturé en présence dudit polyorganosiloxane fonctionnalisé contenant des motifs semblables ou différents de formule (I).

Les quantités respectives de monomère(s) éthyléniquement insaturé(s) et de polyorganosiloxane fonctionnalisé pouvant être mises en oeuvre, correspondent à un rapport pondéral monomère(s) / polyorganosiloxane de l'ordre de 98-50 / 2-50, de préférence de l'ordre de 95-75 / 5-25.

L'opération de polymérisation est réalisée en milieu aqueux en présence d'agents émulsifiants et d'un amorceur de polymérisation par voie radicalaire.

Parmi les agents émulsifiants pouvant être mis en oeuvre, seuls ou en mélange, on peut citer les agents anioniques classiques tels que les sels d'acides gras, les alkylsulfates, les alkylsulfonates, les alkylarylsulfonates, les sulfosuccinates, les alkylphosphates de métaux alcalins, les sels de l'acide abiétique hydrogénés ou non, les agents non-ioniques tels que les alcools gras polyéthoxylés, les alkylphénols polyéthoxylés et éventuellement sulfatés, les acides gras polyéthoxylés.
Ceux-ci peuvent être utilisés à raison de 0,1 à 3% en poids par rapport au poids total de monomère(s) éthyléniquement insaturé(s) et polyorganosiloxane fonctionnalisé.

Les amorceurs pouvant être mis en oeuvre sont du type hydrosolubles ou hydrodispersables comme les hydropéroxydes, tels que l'eau oxygénée, l'hydropéroxyde de cumène, l'hydropéroxyde de tertiobutyle, l'hydropéroxyde de diisopropylbenzène, les persulfates tels que le persulfate de sodium, le persulfate de potassium, le persulfate d'ammonium
Ceux-ci peuvent être utilisés à raison de 0,01 à 4%, de préférence de 0,05 à 2% en poids par rapport au poids total de monomère(s) éthyléniquement insaturé(s) et polyorganosiloxane fonctionnalisé.

Ces amorceurs sont éventuellement associés à un réducteur, tel que les bisulfites ou le formaldéhydesulfoxylate de sodium, les polyéthylènes amines, les sucres tels que dextrose, saccharose, les sels métalliques de l'acide ascorbique. Les quantités de réducteur utilisées peuvent aller jusqu'à 3% en poids par rapport au poids du mélange monomère(s) + polyorganosiloxane fonctionnalisé.

Des agents limiteurs de chaîne peuvent éventuellement être présents dans des proportions allant de 0 à 3% en poids par rapport au mélange monomère(s) + polyorganosiloxane fonctionnalisé. Ils sont généralement choisis parmi les mercaptans tels que N-dodécylmercaptan, le tertiododécylmercaptan ; le cyclohexène ; les hydrocarbures halogénés tels que le chloroforme, le bromoforme, le tetrachlorure de carbone, le tetrabromure de carbone ; les dimères de l'α-méthylstyrène.

L'opération de polymérisation peut être réalisée selon plusieurs modes opératoires différents.
Un premier mode de réalisation consiste à
- homogéneiser un mélange monomère(s) éthyléniquement insaturé(s) /polyorganosiloxane fonctionnalisé au sein d'un mélange eau / émulsifiant,
- et polymériser en présence d'un amorceur hydrosoluble ou hydrodispersable, à une température au moins égale à celle de décomposition dudit amorceur.
   Un autre mode de réalisation consiste à
- préémulsifier un mélange monomère(s) éthyléniquement insaturé(s) /polyorganosiloxane fonctionnalisé / amorceur organosoluble, au sein d'un mélange eau / émulsifiant,
- et polymériser à une température au moins égale à celle de décomposition dudit amorceur
A titre d'exemple d'amorceurs organosolubles on peut citer les péroxydes organiques comme le péroxyde de lauroyle, de benzoyle, de tert-butyle; les azonitriles comme l'azobis-isobutyronitrile.

L'opération de polymérisation se déroule généralement à une température de l'ordre de 60 à 85°C.

Les dispersions aqueuses réactives stables de polyorganosiloxanes fonctionnalisés greffés faisant l'objet de l'invention, peuvent être mises en oeuvre pour la réalisation de compositions silicones durcissables sous l'action de la chaleur, de radiations, de faisceaux d'électrons et/ou à l'aide d'un catalyseur.

Ainsi les dispersions aqueuses réactives stables à base de polyorganosiloxanes fonctionnalisés greffés dérivés de polyorganosiloxanes fonctionnalisés présentant des motifs de formule (I) dans laquelle X représente un atome d'hydrogène peuvent être mises en oeuvre :
- à côté de polyorganosiloxanes portant des fonctions hydroxyles pour la préparation de compositions durcissables en présence de catalyseurs à base de métaux ou de composés métalliques du type étain, platine, rhodium
- à côté de polyorganosiloxanes portant des fonctions alcényles pour la préparation de compositions durcissables en présence de catalyseurs de polyaddition à base de métaux ou de composés métalliques du type platine, rhodium.

Les dispersions aqueuses réactives stables à base de polyorganosiloxanes fonctionnalisés greffés dérivés de polyorganosiloxanes fonctionnalisés présentant des motifs de formule (I) dans laquelle X représente un radical hydroxyl peuvent être mis en oeuvre :
- à côté de silanes portant des groupes hydrolysables du type acyloxy, alcoxy, amino, amido, alcényloxy, aminoxy, cétiminoxy pour la préparation de compositions durcissables par hydrolyse polycondensation en présence de catalyseurs à base de métaux ou de composés métalliques du type étain.

Les dispersions aqueuses réactives stables à base de polyorganosiloxanes fonctionnalisés greffés dérivés de polyorganosiloxanes fonctionnalisés présentant des motifs de formule (I) dans laquelle X représente un radical époxy peuvent être réticulées par voie cationique en présence d'un catalyseur de polymérisation cationique du type hexafluoroantimonate d'iodonium, sous rayonnement UV.

Les applications des dispersions réactives stables à base de polyorganosiloxanes fonctionnalisés greffés faisant l'objet de l'invention, se situent notamment dans le domaine de l'anti-adhérence papier, des peintures hydrofuges et des revêtements semi-épais.

Les revêtements anti-adhérents pour papier sont réalisés à partir de formulations comprenant :
- de 10 à 80% en poids desdites dispersions
- et de 90 à 20% en poids d'une émulsion aqueuse d'un polyorganosiloxane réactif vis-à-vis des fonctions X du polyorganosiloxane fonctionnalisé greffé, pour former par polyaddition ou par hydrolyse et/ou polycondensation, un revêtement réticulé, par voie thermique et/ou sous rayonnement UV en présence d'un catalyseur, ou sous faisceaux d'électrons.

Les exemples suivants sont donnés à titre indicatif.

### Exemple 1 :

On prépare une huile organopolysiloxane insaturée (H1) de formule moyenne 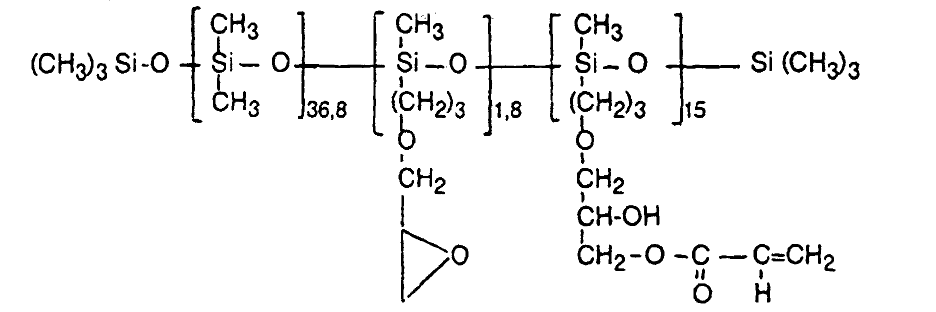 à partir des réactifs suivants :
- 100 g d'une huile polyorganosiloxane titrant 290 meq/100g de fonctions glycidyléther, de formule 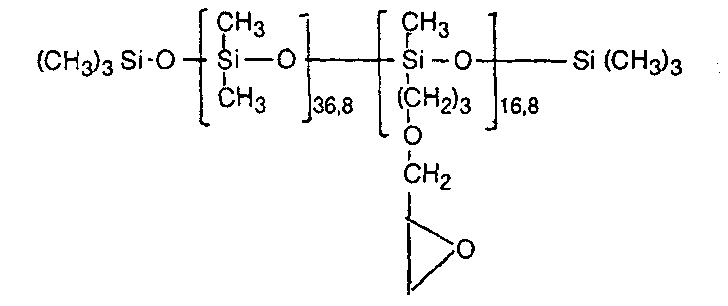
- 21 g d'acide acrylique
- 0,03 g d'hydroquinone (inhibiteur de polymérisation thermique)
- 0,2 g de 1,4 diazabicyclo [2,2,2] octane
- 50 g de toluène
La réaction est réalisée dans un réacteur sous azote, la température du milieu réactionnel étant portée et maintenue à 100°C jusqu'à ce qu'on observe par titrage un taux de conversion de la fonction oxirane d'environ 90%.
On élimine par distillation sous pression réduite (266 Pa) les solvants et l'acide acrylique non réagi.

### Préémulsion

Dans un becher de 1 l on mélange :
- 141 g de méthacrylate de méthyle
- 135 g d'acrylate de méthyle
- et 9 g d'acide acrylique.

On ajoute sous agitation 15 g de l'huile (H1) préparée ci-dessus.
Le milieu est laissé sous agitation jusqu'à complète dissolution.
Dans un becher, on mélange 180 g d'eau désionisée, 3,9 g d'une solution aqueuse de dodecylbenzenesulfonate de sodium (DBS-Na) à 38,5 % en poids.
On introduit dans cette solution et sous agitation le mélange monomères acryliques / diorganopolysiloxane. Le mélange obtenu est émulsifié à l'aide d'un homogénéiseur de type ULTRA-TURAX® (commercialisé par PROLABO) pendant 5 minutes à 20000 tours/minute. On obtient ainsi une préémulsion des monomères et de l'huile silicone fonctionnalisée.

### Polymérisation

Dans un réacteur d'un litre, on introduit 198,5 g d'eau que l'on porte à 82°C sous agitation.
On ajoute ensuite :
- 20 g de la préémulsion préparée ci-dessus,
- 0,90 g de persulfate d'ammonium.
On attend 15 minutes pour que l'amorçage de la réaction s'effectue, puis on ajoute sur une durée de 4 heures, le reste de la préémulsion, soit 463,90 g. On laisse cuire à 82°C pendant 30 minutes. On refroidit à 60°C et on ajoute 0,42 g d'hydroperoxyde de tertiobutyle et 0,18 g de Na₂S₂O₅. On maintient la température à 60°C pendant 30 minutes et on refroidit à température ambiante. On neutralise avec une solution d'ammoniaque diluée à 20 %. On obtient un latex à 40 % d'extrait sec, qui présente une très bonne stabilité au stockage.

### Exemple 2 :

On prépare une huile organopolysiloxane insaturée (H2) de formule moyenne 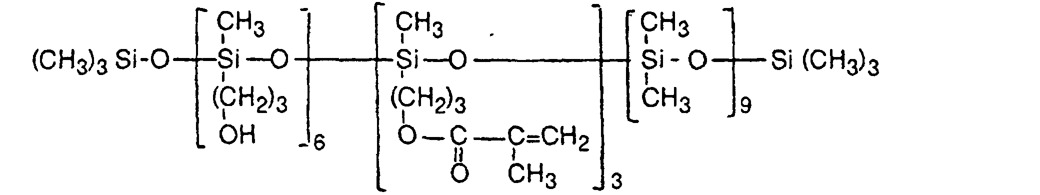 à partir des réactifs suivants :
- 40 g d'une huile polyorganosiloxane titrant 468 meq/100g de fonctions gamma-hydroxypropyle, de formule 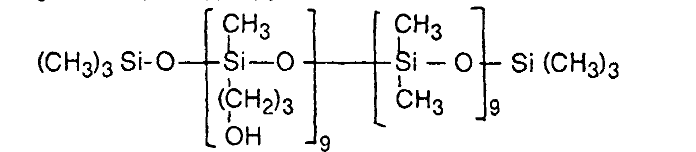
- 65,5 g de méthacrylate de méthyle
- 1,13 g d'oxyde de n-butylétain
- 0,26 g d'hydroquinone
On effectue la réaction pendant 1 heure à 100°C, puis en fin de réaction on élimine l'excès de methacrylate de méthyle par distillation pendant 1 heure sous 0,4 kPa.

### Préémulsion :

On introduit dans un réacteur d'un litre, sous forte agitation (homogénéiseur ULTRA-TURRAX®) :
- 141 g de méthacrylate de méthyle,
- 120 g d'acrylate de butyle,
- 380 g d'eau désionisée,
- 9 g d'acide acrylique,
- 30 g de l'huile silicone (H2) préparée ci-dessus
- 3,5 g de péroxyde de lauroyle,
- 3,9 g d'une solution aqueuse de DBS-Na à 38,5 % en poids,

### Polymérisation :

On chauffe la préémulsion à 70°C sous agitation et maintient cette température pendant toute la durée de réaction, soit 5 heures. On neutralise par ajout d'une solution aqueuse d'ammoniaque à 20 %.
On obtient un latex à 40% d'extrait sec.

### Exemple 3 :

On prépare une huile organopolysiloxane insaturée (H3) de formule moyenne suivante, titrant 220 meg/100 g de fonction acétoacétate 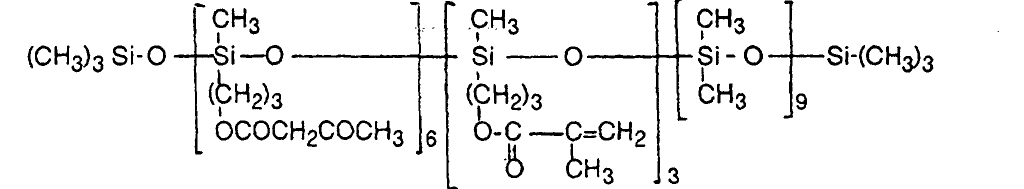 à partir de
- 100g de l'huile silicone (H2) ci-dessus
- 1 ml de triéthylamine
- 150 ml de toluène
- 27,7 g de dicétène La réaction est réalisée à une température de 50°C pendant 1 heure après la fin de l'introduction du dicétène.
L'excès de dicétène est évaporé sous pression réduite (0,7 kPa) à 50-60°C.

### Préémulsion :

On introduit dans un réacteur d'un litre, sous forte agitation (homogénéiseur ULTRA-TURRAX® )
- 141 g de méthacrylate de méthyle,
- 105 g d'acrylate de butyle,
- 9 g d'acide acrylique,
- 380 g d'eau désionisée,
- 45 g de l'huile silicone (H3),
- 7,8 g d'une solution aqueuse de DBS-Na à 38,5 % en poids,
- 2,5 g d'azobisisobutyronitrile (AIBN).

### Polymérisation :

On chauffe la préémulsion à 65°C sous agitation et maintient cette température pendant 6 heures. On neutralise par ajout d'une solution aqueuse de carbonate de sodium.
On obtient un latex à 40% d'extrait sec.

### EXEMPLE 4 :

On prépare une dispersion aqueuse liante pour peinture en revêtement semi-épais, (de concentration pigmentaire en volume inférieure ou égale à 30 %) en mélangeant 65 parties d'un latex de copolymère styrène-acrylate de butyle carboxylé Rhodopas® DS 910 (commercialisé par RHONE-POULENC) avec 35 parties de la dispersion réactive préparée à l'exemple 1. On fabrique un film de polymère à partir de ce mélange, par déshydratation pendant 2 heures à 60°C, dans un moule en élastomère. Le film réticule par réaction des fonctions époxy du silicone et des fonctions COOH du latex. On mesure la résistance à l'eau liquide, par immersion du film pendant 24 heures à 23°C. On prépare un film témoin du même latex Rhodopas® DS 910 seul dans les mêmes conditions et on lui fait subir le même test de résistance à l'eau liquide. Il apparaît que le film contenant la dispersion réactive de silicones greffés présente une quantité d'eau absorbée de 40 % plus faible que celle mesurée pour le film issu du latex seul.

## Revendications

1. Dispersions aqueuses de polyorganosiloxanes fonctionnalisés greffés, **caractérisées en ce qu'**elles sont obtenues par polymérisation radicalaire en émulsion aqueuse ou en microsuspension:
• d'au moins un monomère éthyléniquement insaturé susceptible de polymériser par voie radicalaire choisi dans le groupe constitué par un ester monoéthyléniquement insaturé d'acide carboxylique saturé, un ester saturé ou amide d'acide carboxylique monoéthyléniquement insaturé, un nitrile monoéthyléniquement insaturé, un acide carboxylique monoéthyléniquement insaturé, un hydroxyalkyl- ou aminoalkyl- ester d'acide carboxylique monoéthyléniquement insaturé, un monomère vinylaromatique, et l'acrylate ou le méthacrylate de dicyclopentadiényle,
• en présence uniquement d'un polyorganosiloxane fonctionnalisé contenant des motifs semblables ou différents de formule (I):
Rₐ Y_{b} X_{c} Si O_{(4-a-b-c)/2} (I)
formule dans laquelle :
- les symboles R sont semblables ou différents et représentent un groupe alkyle en C₁-C₁₈, un groupe aryle ou aralkyle en C₆-C₁₂, éventuellement substitué par des atomes d'halogène ;
- les symboles X sont semblables ou différents et représentent une fonction réactive susceptible de réagir chimiquement par addition, polyaddition, condensation, polycondensation, déshydrogénopolycondensation, sous l'action de la chaleur, de radiations, de faisceaux d'électrons et/ou à l'aide d'un catalyseur, consistant dans la fonction hydrogéno ou dans une fonction réactive liée à un atome de silicium par une liaison Si-C ou Si-O-C, ladite fonction réactive autre que la fonction hydrogéno étant un groupe hydrocarboné hydroxyfonctionnel, époxyfonctionnel, alkoxyfonctionnel, aryloxyfonctionnel ou acyloxyfonctionnel contenant de 1 à 20 atomes de carbone ;
- les symboles Y sont semblables ou différents et représentent un reste hydrocarboné éthyléniquement insaturé pouvant contenir un ou plusieurs hétéroélément(s) O ou N, reste lié à un atome de silicium du motif de formule (I) par une liaison Si-C et susceptible de réagir par voie radicalaire avec ledit ou les dits monomère(s) éthyléniquement insaturé(s), ledit reste Y étant un groupe -y-Y', où
. y représente un radical polyvalent alkylène linéaire ou ramifié en C₁-C₁₈, éventuellement prolongé par des restes bivalents éthylène amine ou polyéthylèneamine, oxyalkylène ou polyoxyalkylène en C₁-C₃ éventuellement substitué par un radical hydroxy, hydroxycyclohexylène
. Y' représente un radical alcénylcarbonyloxy;
- a, b et c sont égaux à 0, 1, 2, ou 3;
- a+b+c = 0, 1, 2 ou 3 ;
le taux de motifs SiO_{4/2} étant inférieur à 30% en mole ;
le nombre de motifs de formule (I) dans lesquels l'atome de silicium porte une fonction X et/ou un reste Y est tel que lesdits polyorganosiloxanes contiennent
- au moins 5 milliéquivalents de fonctions X pour 100 grammes de polyorganosiloxane de formule (I),
- au moins 5 milliéquivalents, de restes Y pour 100 grammes de polyorganosiloxane de formule (I),
- étant exclu la possibilité selon laquelle les polyorganosiloxanes de formule (I) sont obtenus par polymérisation en émulsion préalablement à la préparation des dispersions aqueuses.

2. Dispersions aqueuses de polyorganosiloxanes fonctionnalisés greffés selon la revendication 1, **caractérisées en ce que** le nombre de motifs de formule (I) dans lesquels l'atome de silicium porte une fonction X et/ou un reste Y est tel que lesdits polyorganosiloxanes contiennent :
- de 10 à 500 milliéquivalents de fonctions X pour 100 grammes de polyorganosiloxane de formule (I),
- de 10 à 500 milliéquivalents de restes Y pour 100 grammes de polyorganosiloxane de formule (I).

3. Dispersions aqueuses de polyorganosiloxanes fonctionnalisés greffés selon la revendication 1 ou 2, **caractérisées en ce que** les quantités respectives de monomère(s) éthyléniquement insaturé(s) et de polyorganosiloxane fonctionnalisé mises en oeuvre, correspondent à un rapport pondéral monomère(s) / polyorganosiloxane de l'ordre de 98-50/2-50

4. Dispersions aqueuses de polyorganosiloxanes fonctionnalisés greffés selon la revendication 3, **caractérisées en ce que** les quantités respectives de monomère(s) éthyléniquement insaturé(s) et de polyorganosiloxane fonctionnalisé mises en oeuvre, correspondent à un rapport pondéral monomère(s) / polyorganosiloxane de l'ordre de 95-75 /5-25.

5. Dispersions aqueuses de polyorganosiloxanes fonctionnalisés greffés selon l'une quelconque des revendications 1 à 4, **caractérisées en ce que** l'opération de polymérisation est réalisée en milieu aqueux en présence d'agents émulsifiants et d'un amorceur de polymérisation par voie radicalaire.

6. Dispersions aqueuses de polyorganosiloxanes fonctionnalisés greffés selon la revendication 5, **caractérisées en ce qu'**elles sont obtenues selon un mode de réalisation consistant à homogéneiser un mélange monomère(s) éthyléniquement insaturé(s) / polyorganosiloxane fonctionnalisé au sein d'un mélange eau / émulsifiant et polymériser en présence d'un amorceur hydrosoluble ou hydrodispersable, à une température au moins égale à celle de décomposition dudit amorceur.

7. Dispersions aqueuses de polyorganosiloxanes fonctionnalisés greffés selon la revendication 5, **caractérisées en ce qu'**elles sont obtenues selon un mode de réalisation consistant à préémulsifier un mélange monomère(s) éthyléniquement insaturé(s) / polyorganosiloxane fonctionnalisé / amorceur organosoluble, au sein d'un mélange eau / émulsifiant et polymériser à une température au moins égale à celle de décomposition dudit amorceur.

8. Utilisation des dispersions aqueuses de polyorganosiloxanes fonctionnalisés greffés faisant l'objet de l'une quelconque des revendications précédentes pour la réalisation de compositions silicones durcissables sous l'action de la chaleur, de radiations, de faisceaux d'électrons et/ou à l'aide d'un catalyseur.

## Patentansprüche

1. Wäßrige Dispersionen von gepfropften, funktionalisierten Polyorganosiloxanen, **dadurch gekennzeichnet, daß** sie durch radikalische Polymerisation in wäßriger Emulsion oder in Mikrosuspension erhalten werden:
• von mindestens einem ethylenisch ungesättigten Monomeren, das fähig ist, auf radikalischem Wege zu polymerisieren, gewählt aus der Gruppe, die gebildet wird durch einen monoethylenisch ungesättigten Ester einer gesättigten Carbonsäure, einen gesättigten Ester oder ein Amid von einer monoethylenisch ungesättigten Carbonsäure, ein monoethylenisch ungesättigtes Nitril, eine monoethylenisch ungesättigte Carbonsäure, einen Hydroxyalkyl- oder Aminoalkylester einer monoethylenisch ungesättigten Carbonsäure, ein vinylaromatisches Monomer und das Acrylat oder das Methacrylat von Dicyclopentadienyl,
. in Anwesenheit von lediglich einem funktionalisierten Polyorganosiloxan, das gleiche oder verschiedene Struktureinheiten der Formel (I)
Rₐ Y_{b} X_{c} SiO_{(4-a-b-c)/2} (I)
enthält, in der
- die Symbole R gleich oder verschieden sind und eine Gruppe Alkyl mit 1 bis 18 Kohlenstoffatomen, eine Gruppe Aryl oder Aralkyl mit 6 bis 12 Kohlenstoffatomen, gegebenenfalls substituiert durch Halogenatome, darstellen,
- die Symbole X gleich oder verschieden sind und eine reaktive Funktion darstellen, die fähig ist, chemisch durch Addition, Polyaddition, Kondensation, Polykondensation, Deshydrogenopolykondensation unter der Einwirkung von Wärme, Strahlung, Elektronenstrahlen und/oder mit Hilfe eines Katalysators zu reagieren, bestehend in der Wasserstoff-Funktion oder in einer reaktiven Funktion, die an ein Siliciumatom durch eine Bindung Si-C oder Si-O-C gebunden ist, wobei die genannte reaktive Funktion anders ist als die Wasserstoff-Funktion und eine hydroxyfunktionelle, epoxyfunktionelle, alkoxyfunktionelle, aryloxyfunktionelle oder acyloxyfunktionelle Kohlenwasserstoff-Gruppe mit 1 bis 20 Kohlenstoffatomen darstellt;
- die Symbole Y gleich oder verschieden sind und einen ethylenisch ungesättigten Kohlenwasserstoff-Rest darstellen, der ein oder mehrere Heteroelement(e) O oder N enthalten kann, wobei der Rest an ein Siliciumatom der Struktureinheit der Formel (I) durch eine Bindung Si-C gebunden und fähig ist, auf radikalischem Wege mit dem oder den genannten ethylenisch ungesättigten Monomer(en) zu reagieren, und wobei der Rest Y eine Gruppe -y-Y' ist, worin
. y einen linearen oder verzweigten, polyvalenten Rest Alkylen mit 1 bis 18 Kohlenstoffatomen darstellt, gegebenenfalls verlängert durch bivalente Reste Ethylenamin oder Polyethylenamin, Oxyalkylen oder Polyoxyalkylen mit 1 bis 3 Kohlenstoffatomen, gegebenenfalls substituiert durch einen Rest Hydroxy, Hydroxycyclohexylen,
. Y' einen Rest Alkenylcarbonyloxy darstellt;
- a, b und c gleich 0, 1, 2 oder 3 sind;
- a + b + c = 0, 1, 2 oder 3 ist; wobei der Gehalt an Struktureinheiten SiO_{4/2} unter 30 Mol-% liegt; die Anzahl der Struktureinheiten der Formel (I), in denen das Siliciumatom eine Funktion X und/oder einen Rest Y trägt, derart ist, daß die genannten Polyorganosiloxane enthalten:
- mindestens 5 Milliäquivalent Funktionen X pro 100 Gramm Polyorganosiloxan der Formel (I),
- mindestens 5 Milliäquivalent Reste Y pro 100 Gramm Polyorganosiloxan der Formel (I),
- und wobei die Möglichkeit ausgeschlossen ist, nach der die Polyorganosiloxane der Formel (I) durch Emulsionspolymerisation vor der Herstellung der wäßrigen Dispersionen erhalten werden.

2. Wäßrige Dispersionen von gepfropften, funktionalisierten Polyorganosiloxanen nach Anspruch 1, **dadurch gekennzeichnet, daß** die Anzahl von Struktureinheiten der Formel (I), in denen das Siliciumatom eine Funktion X und/oder einen Rest Y trägt, derart ist, daß die genannten Polyorganosiloxane enthalten:
- 10 bis 500 Milliäquivalent Funktionen X pro 100 Gramm Polyorganosiloxan der Formel (I),
- 10 bis 500 Milliäquivalent Reste Y pro 100 Gramm Polyorganosiloxan der Formel (I).

3. Wäßrige Dispersionen von gepfropften, funktionalisierten Polyorganosiloxanen nach Anspruch 1 oder 2, **dadurch gekennzeichnet, daß** die jeweiligen eingesetzten Mengen von ethylenisch ungesättigtem(n) Monomer(en) und von funktionalisiertem Polyorganosiloxan einem Gewichtsverhältnis Monomer(e)/Polyorganosiloxan in der Größenordnung von 98-50 / 2-50 entsprechen.

4. Wäßrige Dispersionen von gepfropften, funktionalisierten Polyorganosiloxanen nach Anspruch 3, **dadurch gekennzeichnet, daß** die jeweiligen eingesetzten Mengen von ethylenisch ungesättigtem(n) Monomer(en) und von funktionalisiertem Polyorganosiloxan einem Gewichtsverhältnis Monomer(e)/Polyorganosiloxan in der Größenordnung von 95-75 / 5-25 entsprechen.

5. Wäßrige Dispersionen von gepfropften, funktionalisierten Polyorganosiloxanen nach irgendeinem der Ansprüche 1 bis 4, **dadurch gekennzeichnet, daß** die Operation der Polymerisation im wäßrigen Medium in Anwesenheit von Emulgierungsmitteln und einem Initiator für die Polymerisation auf radikalischem Wege realisiert wird.

6. Wäßrige Dispersionen von gepfropften, funktionalisierten Polyorganosiloxanen nach Anspruch 5, **dadurch gekennzeichnet, daß** sie nach einer Ausführungsform erhalten werden, die darin besteht, eine Mischung von ethylenisch ungesättigtem(n) Monomer(en) /funktionalisiertem Polyorganosiloxan in einer Mischung Wasser / Emulgierungsmittel zu homogenisieren und in Anwesenheit eines wasserlöslichen oder wasserdispergierbaren Initiators bei einer Temperatur von mindestens gleich der der Zersetzung des genannten Initiators zu polymerisieren.

7. Wäßrige Dispersionen von gepfropften, funktionalisierten Polyorganosiloxanen nach Anspruch 5, **dadurch gekennzeichnet, daß** sie nach einer Ausführungsform erhalten werden, die darin besteht, eine Mischung von ethylenisch ungesättigtem(n) Monomer(en) /funktionalisiertem Polyorganosiloxan / organolöslichem Initiator in einer Mischung Wasser / Emulgierungsmittel vorzuemulgieren und bei einer Temperatur von mindestens gleich der der Zersetzung des genannten Initiators zu polymerisieren.

8. Verwendung der wäßrigen Dispersionen von gepfropften, funktionalisierten Polyorganosiloxanen, die den Gegenstand von irgendeinem der vorstehenden Ansprüche bilden, für die Herstellung von unter der Einwirkung von Wärme, Strahlung, Elektronenstrahlen und/oder mit Hilfe eines Katalysators härtbaren Silicon-Zusammensetzungen.

## Claims

1. Aqueous dispersions of grafted functionalized polyorganosiloxanes, **characterized in that** they are obtained by radical polymerization in aqueous emulsion or in microsuspension:
• of at least one ethylenically unsaturated monomer capable of polymerizing by radical route chosen from the group consisting of a monoethylenically unsaturated ester of saturated carboxylic acid, a saturated ester or an amide of monoethylenically unsaturated carboxylic acid, a monoethylenically unsaturated nitrile, a monoethylenically unsaturated carboxylic acid, a hydroxyalkyl or aminoalkyl ester of monoethylenically unsaturated carboxylic acid, a vinylaromatic monomer, dicyclopentadienyl acrylate and dicyclopentadienyl methacrylate,
• in the presence solely of a functionalized polyorganosiloxane containing similar or different units of formula (I):
RₐY_{b}X_{c}SiO_{(4-a-b-c)/2} (I)
in which formula:
- the symbols R are similar or different and denote a C₁-C₁₈ alkyl group or a C₆-C₁₂ aryl or aralkyl group optionally substituted by halogen atoms;
- the symbols X are similar or different and denote a reactive functional group capable of reacting chemically by addition, polyaddition, condensation, polycondensation or dehydropolycondensation, under the effect of heat, radiations or electron beams and/or with the aid of a catalyst, consisting of the hydro functional group or of a reactive functional group bonded to a silicon atom by a Si-C or Si-O-C bond, the said reactive functional group other than the hydro functional group being a hydroxyfunctional, epoxyfunctional, alkoxyfunctional, aryloxyfunctional or acyloxyfunctional hydrocarbon group comprising from 1 to 20 carbon atoms;
- the symbols Y are similar or different and denote an ethylenically unsaturated hydrocarbon residue which may contain one or more heteroelements O or N, a residue which is bonded to a silicon atom of the unit of formula (I) by an Si-C bond and capable of reacting by a radical route with the said ethylenically unsaturated monomer(s), the said residue Y being a group -y-Y', where
- y denotes a C₁-C₁₈ linear or branched polyvalent alkylene radical optionally extended by divalent ethyleneamine or polyethyleneamine, oxyalkylene or polyoxyalkylene C₁-C₃ residues, optionally substituted by a hydroxyl radical, or a hydroxycyclohexylene radical,
- Y' denotes an alkenylcarbonyloxy radical,
- a, b and c are equal to 0, 1, 2 or 3;
- a + b + c = 0, 1, 2 or 3;
the SiO_{4/2} unit content being lower than 30 mol%;
the number of units of formula (I) in which the silicon atom carries a functional group X and/or a residue Y is such that the said polyorganosiloxanes contain
- at least 5 milliequivalents of X functional groups per 100 grams of polyorganosiloxane of formula (I),
- at least 5 milliequivalents of Y residues per 100 grams of polyorganosiloxane of formula (I),
- excluding the possibility according to which the polyorganosiloxanes of formula (I) are obtained by emulsion polymerization prior to the preparation of the aqueous dispersions.

2. Aqueous dispersions of grafted fonctionalized polyorganosiloxanes according to Claim 1, **characterized in that** the number of units of formula (I) in which the silicon atom carries a functional group X and/or a residue Y is such that the said polyorganosiloxanes contain:
- from 10 to 500 milliequivalents of X functional groups per 100 grams of polyorganosiloxane of formula (I),
- from 10 to 500 milliequivalents of Y residues per 100 grams of polyorganosiloxane of formula (I).

3. Aqueous dispersions of grafted functionalized polyorganosiloxanes according to Claim 1 or 2, **characterized in that** the respective quantities of ethylenically unsaturated monomer(s) and of functionalized polyorganosiloxane which are used correspond to a monomer(s)/polyorganosiloxane weight ratio of the order of 98--50/2-50.

4. Aqueous dispersions of grafted functionalized polyorganosiloxanes according to Claim 3, **characterized in that** the respective quantities of ethylenically unsaturated monomer(s) and of functionalized polyorganosiloxane which are used correspond to a monomer (s) /polyorganosiloxane weight ratio of the order of 95-75/5-25.

5. Aqueous dispersions of grafted functionalized polyorganosiloxanes according to any one of Claims 1 to 4, **characterized in that** the polymerization operation is carried out in an aqueous medium in the presence of emulsifying agents and of an initiator for polymerization by a radical route.

6. Aqueous dispersions of grafted functionalized polyorganosiloxanes according to Claim 5, **characterized in that** they are obtained by a method of preparation consisting in homogenizing a mixture of ethylenically unsaturated monomer(s)/functionalized polyorganosiloxane in a water/emulsifier mixture and polymerizing in the presence of a water-soluble or water-dispersible initiator at a temperature at least equal to that of decomposition of the said initiator.

7. Aqueous. dispersions of grafted functionalized polyorganosiloxanes according to Claim 5, **characterized in that** they are obtained by a method of preparation consisting in preemulsifying a mixture of ethylenically unsaturated monomer(s)/functionalized polyorganosiloxane-/organosoluble initiator in a water/emulsifier mixture and polymerizing at a temperature at least equal to that of decomposition of the said initiator.

8. Use of the aqueous dispersions of grafted functionalized polyorganosiloxanes forming the subject of any one of the preceding claims for the production of silicone compositions which can be cured under the effect of heat, radiations or electron beams and/or with the aid of a catalyst.
